# EUROPEAN PATENT SPECIFICATION

(11) **EP 0 962 430 B1**
(45) Date of publication and mention of the grant of the patent: **15.01.2003**
(21) Application number: 98830351.7
(22) Date of filing: 05.06.1998
(51) Int. Cl.: C04B 41/48

(54) **Method for consolidation of natural stone blocks or recomposed blocks**
Verfahren zum Verfestigen von natürlichen oder wiederhergestellten Steinblöcken
Procédé de consolidation de roc naturel ou reconstitué

(43) Date of publication of application: 08.12.1999
(73) Proprietor: Taltos SPA, 10060 Inverso Pinasca (Torino) (IT)
(72) Inventor: Marocco, Giuseppe, 10121 Torino (IT)
(74) Representative: Robba, Pierpaolo

(56) References cited:
- DE-A- 2 254 146
- DE-A- 3 930 281
- US-A- 4 013 809
- US-A- 4 024 098

## Description

The present invention refers to a method for consolidating stone blocks, or stone materials in general, through sealing them with hardenable resins.

In the activity of transforming natural stone blocks into slabs or hand-manufactured articles the raw material, the block, is often defective and conditions the whole production cycle, from the mining stage to the laying of the hand-manufactured articles.

It is well known that marbles and natural stones in general are not homogeneous materials in that their structure is highly influenced by the mineralogical composition and by the geologic history of mineral deposits.

While other raw materials originate from production processes that can be monitored and improved, marble, granite and other natural stones are the result of millions of years of modifications of the terrestrial crust and testify that trouble through their structural heterogeneity.

On the other hand very often the heterogeneity of parts confers to a stone his appreciated chromatic and decorative characteristics. More precious and polychrome materials are naturally most defective materials because of their tormented geologic formation.

After the manufacturing process the presence of structural defects in materials complicates yard problems for laying, reduces lifetime of hand-manufactured articles and causes a more difficult and expensive maintenance.

Extractive activity is the first stage of the production cycle. Quarry operations are conditioned by defects of the raw material, macro-defects, fissures and structural discontinuities of the deposit and are driven by them.

When the taken care is not sufficient to guarantee a percentage of marketable extracted material that covers the extraction costs, the layer is abandoned.

Next working phase comprises cutting of the quarry block by means of a saw frame for square blocks suitable for the production of slabs or by means of diamond disk saws for shapeless blocks or blocks squared but with many structural defects.

From saw frames can be obtained slabs that are sections of the quarry block, from disk saws can be obtained directly small dimension objects.

The structural defects present in the block influence the results in both cases. From the saw frame could come out broken slabs and, in the more serious cases, the whole block could crumble while cutting, with potential damages to the frame and however with economic remarkable losses.

From disk saws could instead come out a certain number of broken pieces.

In the following squaring operations of the manufactured articles and their calibration and/or polishing, the fissures and the residual fractures, also if they didn't cause fractures and divisions while cutting, can still create problems, causing the division of the same articles along the line of fracture.

While products that come out broken from disk saws could not be sheltered and find residual uses in the ulterior reduction of size or in the composition of various products in which the fragments are joined together by means of cement and resinous glues, for slabs it is often attempted a reparation gluing the parts together, with approximate and expensive manuals operations.

The slabs so recomposed and also slabs not broken, but that don't give sufficient guarantees for going on with the process up to the final polishing, are often subjected to reparation and reinforcement operations.

These operations consist in dripping very fluid gluing resins on the surface of the damaged slab so that their infiltrating and following hardening connects together the disconnected parts.

Often together with this provision is made a reinforcement of the back face of the slab by means of webs or fiber glass or cotton or other fibers glued to the same slab.

The technical evolution of production lines, more and more automated and fast, has given impulse to these reparation techniques, but the results are modest and partial.

Moreover such techniques are useful only for slabs which come out not fragmented from the blocks.

For many blocks the process doesn't even start for the high risk of crumbling under the saw frame. In other cases the process starts but ends with a very low percentage of whole slabs.

The structural weakness of many raw stone materials is the reason why the stone activity has many difficulties to find industrial applications and continues in a hand-manufacturing way also in presence of a natural vocation for mass-production work.

An alternative technique that allows recovering raw material blocks of good decorative quality but with many structural defects, consists in impregnating the natural stone block with hardenable resins before starting the working cycle in factory.

Several attempts have already been done in this sense on parallelepiped blocks, driven from the logic that a process of impregnation in a vacuum state with resins able to shelter structural defects inside the block, would allow the resin to reach all structural defects which are in communication on the outside because of appearing of the defects on the surface of one of the six faces of the block.

But no one of these attempts allowed to reach acceptable technical-economic results, the consumption of resins necessary to the process is too elevated, the resins are in fact very expensive, and the same factories are expensive and difficult to manage.

Disregarding the treatment of the shapeless blocks, that is always disadvantageous, the treatment of parallelepiped square blocks requires heavy and expensive formworks that must be built around the block to form a tank that contains the block and the impregnation resin.

Since the quarry blocks don't ever have the same dimensions, the problem of maintaining acceptable the consumption and the cost of the necessary impregnation resins remains without solution.

Some attempts have been made in order to use variable size formworks, but, besides the more elevated cost of the structure, the sealing between the walls forming the formwork was not guaranteed.

In the Italian Patent n. 1027222, equivalent to US 4 013 809, is described a method for forming a flexible container around a stone block, in particular a plastic bag, filling the spaces between the block so contained and the walls of a pressure tight container with an oil of specific weight similar to the specific weight of the resins introduced inside the container.

Varying the level of the oil around the block, wrapped and protected from the plastic bag, it is possible to regulate the quantity of impregnation resin around the block.

Moreover it is provided that the oil is recovered after each operation in a reservoir external to the container to be subsequently reused in following impregnation operations.

This method nevertheless present operational limits deriving from technical difficulties in the practical realisation of the idea, beyond to involve elevated management costs.

A first object of the present invention is therefore to make possible and practicable the impregnation of a whole quarry block with a vacuum impregnation process using hardenable adhesive resins.

Document US 4 024 098 illustrates an example of an impregnation resin. The reinforcing composition disclosed is suitable for reinforcement in general of mineral structures, such as stone slabs or blocks. The use of the reinforcing composition facilitates reinforcement of natural or artificial mineral structures and products.

These and other objects are reached from the impregnation method according to the present invention, as claimed in the accompanying claims.

The method according to the invention can be advantageously used for the consolidation of marble or stone blocks of various dimensions reducing the waste of resin and the total costs of treatment.

The above and other objects of the invention will result more clear from the description of a preferred embodiment with reference to the accompanying drawings in which:
the Figure 1 shows a block of marble covered by elastomer sheets, ready for the resin impregnation treatment according to the method of the present invention; and
the Figure 2 shows a particular of the elastomer sheet.

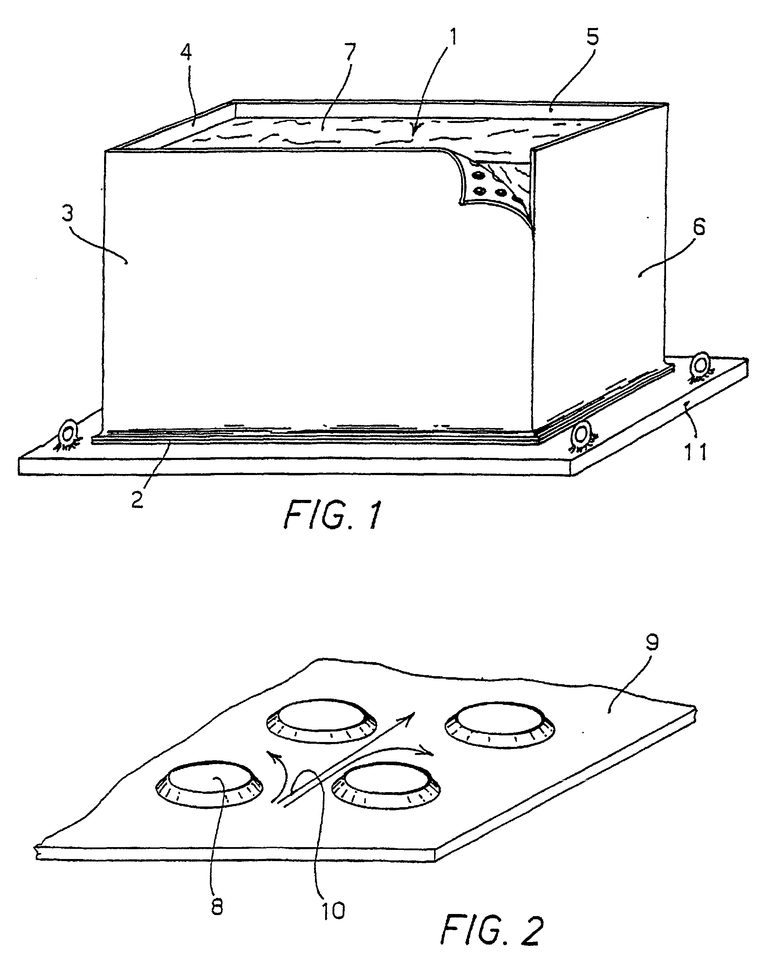

With reference to the figures 1 and 2 is now described a method for impregnating and consolidating a block of natural stone or recomposed material, which we will call from now on simply "block".

The block 1 can in fact be of any stone material or other similar material, as marble or natural granite, or it could be a block of stone recomposed material.

The block 1 is initially subjected to heating for a period of time sufficiently long to reach an inside temperature of at least 20°C.

This heating is done, for instance by inserting the block into a heating chamber, by means of hot air, electric heating elements or sets of infrared ray lamps.

The block is then placed on a flat and rigid platform 11, for laying and transporting, with interposition of a base sheet 2, having dimensions exceeding of some centimeters the dimension in plan of the block, on which are arranged some discontinuous spacers.

The base sheet 2 is a sheet, preferably having a smooth and impermeable to liquids and gases surface, made of elastomer, plastics, impregnated fiber or thin metal.

The spacers could be for instance strips or pieces of the same material of the base sheet disposed on the sheet in a discontinuous way in order to form a net of intercommunicating channels 10 under the block 1.

Alternatively the base sheet 2 could be an elastomer sheet, of the type commonly used for sheet-paving, a particular of which is shown in figure 2, whose surface presents some circular relief zones 8, repeated and frequent.

Subsequently, to the four vertical faces of the block 1, are applied four lateral sheets 3, 4, 5, 6, impermeable to liquids and gases, with interposition of spacer elements 8, integral with the lateral sheet and glued to the wall of the block.

The lateral sheets 3,4,5,6 are preferably elastomer sheets, like that shown in figure 2 and commonly used for sheet-paving, having on its surface circular relief zones 8, that works as spacer elements.

In general the lateral sheets 3,4,5,6 can be thin plain sheets made of metal, plastics, rubber or impregnated fabric, while the spacer elements can be obtained on the block's surface, or on the sheets surface, by means of gluing or painting, and subsequently glued respectively to the surface of the sheets or to the wall of the block 1.

The lateral sheets are glued together on the bordering sides and glued on their inferior edge to the base sheet 2, in order to form a sheath that wraps the block in a watertight container.

In correspondence of the edges of the block could be glued some angular reinforcements for increasing the hydraulic and vacuum seal of the container.

Alternatively the vertical walls can be wrapped by a single sheet folded up around the block, reducing in this way the glued parts and further increasing the sealing.

The lateral sheet or sheets are some centimeters higher than the block 1, in such a way to form onto the block a containment basin for a fluid resin that will be subsequently dripped over the block.

The platform on which the block is placed is then transferred in a pressure tight container, or autoclave, endowed with openings for the passage of the impregnation resins and suitably with a porthole for allowing an operator the visual control of the process.

The resins can be dripped on the block by means of a pipe which draws from a container placed on a lower level, thanks to the vacuum eddy inside the autoclave or, alternatively, by means of pumps.

The autoclave is then evacuated into a vacuum state in order to obtain a rapid drying in depth of the block, favoured by the preheating and by the reduced vapour tension of the water to pressures as more reduced. It is also possible to use some known techniques for improving and accelerating the drying process, for instance using cold elements placed inside the autoclave.

After the drying of the block and the attainment of a residual pressure not higher than 20 torr (2.6 Pa), or however a pressure the most possible near to the vacuum, the resin is progressively introduced up to cover the superior face of the block.

The resin can therefore flow without obstacles in the interfaces between block and covering sheets, under the block and eventually also in the more remarkable fractures present in the block.

The resin destined to penetrate subsequently in the small fractures and structural discontinuities of the block is accumulated, in this stage, above the superior face of the block. The thickness of fluid resin to be accumulated on the block depends on the type of stone to restore, and on its defects and is determined by experience on statistical bases.

It is important that the block is completely covered by the resin as a possible fissure uncovered on the superior surface of the block would allow the air to infiltrate inside of the block jeopardising the pressure impregnation process.

Subsequently the autoclave is reconnected with the external atmosphere and the air, re-entering in the autoclave, pushes on the surface of fluid resin forcing it to penetrate into the block.

In order to increase the penetration of the resin into the block after the re-establishment of the atmospheric pressure in the autoclave, an overpressure could be introduced for increasing the pressure on the superior face and favouring the flowing of the resin also in the micro-fissures of the material inside the block.

The platform with the block is therefore extracted from the autoclave and the resin is let harden in a natural way or by means of heating of the same block.

The block is then carried under the saw frame for cutting or on the disk-saw and is cut without the necessity of removing the elastomer covering that covers the block on five sides.

The above described method is simple, it doesn't make use of rigid containment formworks and it can be applied to blocks of any dimension, provided they are relatively squared.

Besides, given the low cost of the elastomer sheets and the small quantity of wasted resin, the process results economically very convenient.

## Claims

1. Method for consolidating blocks of natural stone or recomposed material, substantially parallelepiped, having fractures and internal cavities communicating on the outside, using a vacuum impregnation process in autoclave with hardenable resins,
- placing the block (1) to consolidate on a platform (11), with interposition of a base sheet (2), impermeable to liquids and gases, on which are arranged some discontinuous spacers;
- applying to each side wall of the block a lateral sheet (3,4,5,6), impermeable to liquids and gases, with interposition of spacer elements (8) integral with the lateral sheet or with the wall of the block (1) and glued respectively to the wall of the block (1) or to the lateral sheet, in order to form a connection for points between the block (1) and said lateral sheets (3,4,5,6), each lateral sheet (3,4,5,6) being higher then the block itself for forming on the upper side of the block a containment basin;
- joining together said lateral sheets (3,4,5,6) on the bordering sides and to the base sheet (2), in order to form a sheath that wraps the block in a watertight container;
- inserting the block (1) in said autoclave and inducing a depression;
- dripping into said containment basin on the upper part (7) of the block (1) and in the interstices between the block and the sheets a fluid hardenable resin in order to cover the block itself completely;
- removing said depression from the autoclave so that the resin penetrates in said fractures or cavities inside the block (1);
- allowing or inducing to harden the resin around the block and in said fractures or inside cavities.

2. Method for consolidating according to claim 1, **characterised in that** the base sheet (2) and the lateral sheets (3,4,5,6) have a dimension that is some centimeters larger than the dimension of the wall of the block to which they are applied and they are glued together in correspondence of the edges of the block in such a way to form a watertight container for the block itself.

3. Method for consolidating according to claim 1, **characterised in that**, in correspondence of the edges of the block, are glued some angular reinforcements for increasing the hydraulic and vacuum seal of the watertight container.

4. Method for consolidating according to claim 1, **characterised in that** the lateral sheets (3,4,5,6) are made of a single sheet that wraps all the vertical walls of the block (1).

5. Method for consolidating according to claim 1, **characterised in that** it comprises a preliminary step of heating the block (1) for facilitating the following vacuum drying and the evaporation of the water contained inside said fractures and cavities.

6. Method for consolidating according to claim 5, **characterised in that** the drying process is accelerated by the condensation of the emitted vapours on refrigerated elements placed inside said autoclave during the depression phase.

7. Method for consolidating according to claim 1, **characterised in that**, after the restoration of the atmospheric pressure inside the autoclave, follows an overpressure phase that further favours the penetration of the resin inside the block (1).

8. Method for consolidating according to any of the preceding claims, **characterised in that** said spacers (8) maintain the surface (9) of the sheets outdistanced from the surface of the block (1) forming flowing channels (10) for said hardenable resin.

9. Method for consolidating according to claim 8, **characterised in that** the lateral sheets (3,4,5,6) are elastomer sheets having, on the surface coupled to the block (1), relief zones (8) in contact with the surface of the block and glued to it.

10. Method for consolidating according to claim 8, **characterised in that** the lateral sheets (3,4,5,6) are thin plain sheets made of metal, plastics, rubber or impregnated fabric and the spacer elements are obtained on the block's surface by means of gluing or painting and are subsequently glued to the surface of the lateral sheets.

11. Method for consolidating according to claim 8, **characterised in that** the lateral sheets (3,4,5,6) are thin plain sheets made of metal, plastics, rubber or impregnated fabric and the spacer elements are obtained on the surface of said sheets by means of gluing or painting and are subsequently glued to the corresponding walls of the block (1).

## Patentansprüche

1. Verfahren zum Festigen von im Wesentlichen quaderförmigen Blöcken aus Naturstein oder wieder zusammengesetztem Material, die Brüche und innere Hohlräume aufweisen, die mit der Außenseite in Verbindung stehen, unter Anwendung eines Vakuumimprägnierungsverfahrens in Autoklaven mit härtbaren Harzen, wobei
- der zu festigende Block (1) auf eine Plattform (11) gestellt wird unter Zwischenlegung einer plattenförmigen Basislage (2), die für Flüssigkeiten und Gase undurchlässig ist und auf der mit Unterbrechungen einige Distanzhalter angebracht sind;
- an jeder Seitenwand des Blockes eine plattenförmige Seitenlage (3, 4, 5, 6), die für Flüssigkeiten und Gase undurchlässig ist, angebracht wird mit Zwischenlegung von Distanzhalteelementen (8), die in die plattenförmige Seitenlage oder in die Wand des Blocks (1) integriert sind und auf die Wand des Blocks (1) oder auf die plattenförmige Seitenlage geklebt sind, um eine Verbindung zwischen Punkten des Blocks (1) und den plattenförmigen Seitenlagen (3, 4, 5, 6) zu bilden, wobei jede plattenförmige Seitenlage (3, 4, 5, 6) höher ist als der Block, um auf der oberen Seite des Blockes ein eingedämmtes Becken zu bilden;
- wobei die plattenförmigen Seitenlagen (3, 4, 5, 6) an den angrenzenden Seiten und mit der plattenförmigen Basislage (2) verbunden werden, um eine Ummantelung zu bilden, die den Block als wasserfester Behälter umgibt;
- der Block in den Autoklaven eingebracht und ein Unterdruck erzeugt wird;
- in das eingedämmte Becken auf den oberen Teil (7) des Blocks (1) und in die Zwischenräume zwischen dem Block und den Abdeckungen ein flüssiges, härtbares Harz getropft wird, bis der Block vollständig bedeckt ist;
- der Unterdruck in der Autoklave aufgehoben wird, so dass das Harz in die Brüche und Hohlräume innerhalb des Blocks (1) eindringt;
- das Harz rund um den Block und in den Brüchen und innerhalb der Hohlräume härten gelassen wird oder dies veranlasst wird.

2. Verfahren zur Festigung nach Anspruch 1, **dadurch gekennzeichnet, dass** die plattenförmige Basislage (2) und die plattenförmigen Seitenlagen (3, 4, 5, 6) eine Ausdehnung aufweisen, die um einige Zentimeter größer ist als die Ausdehnung der Blockwand, an der sie angebracht sind und dass sie korrespondierend zu den Kanten des Blocks in einer Weise miteinander verklebt werden, dass sie einen wasserfesten Behälter für den Block bilden.

3. Verfahren zur Festigung nach Anspruch 1, **dadurch gekennzeichnet, dass** korrespondierend zu den Kanten des Blocks einige winkelige Verstärkungen zur Erhöhung der hydraulischen Abdichtung und der Vakuumsabdichtung des wasserfesten Behälters aufgeklebt werden.

4. Verfahren zur Festigung nach Anspruch 1, **dadurch gekennzeichnet, dass** die plattenförmigen Seitenlagen (3, 4, 5, 6) aus einer einzigen Platte bestehen, die alle senkrechten Wände des Blocks (1) umgibt.

5. Verfahren zur Festigung nach Anspruch 1, **dadurch gekennzeichnet, dass** dieses eine Vorbereitungsphase für das Erwärmen des Blockes (1) umfasst, um die nachfolgende Trocknung im Vakuum und die Verdunstung des Wassers, das innerhalb der Brüche und Hohlräume enthalten ist, zu erleichtern.

6. Verfahren zur Festigung nach Anspruch 5, **dadurch gekennzeichnet, dass** das Trockenverfahren durch die Kondensation von emittierten Dämpfen auf gekühlten Elementen, die während der Unterdruckphase innerhalb der Autoklave angebracht sind, beschleunigt wird.

7. Verfahren zur Festigung nach Anspruch 1, **dadurch gekennzeichnet, dass** auf die Wiederherstellung des Luftdrucks innerhalb des Autoklaven eine Überdruckphase erfolgt, die das Eindringen des Harzes in den Block (1) begünstigt.

8. Verfahren zur Festigung nach einem der vorhergehenden Ansprüche, **dadurch gekennzeichnet, dass** die Distanzhalter (8) die Oberfläche (9) der Lagen von der Oberfläche des Blockes (1) in Abstand halten, wobei sie Fließkanäle (10) für das härtbare Harz bilden.

9. Verfahren zur Festigung nach Anspruch 8, **dadurch gekennzeichnet, dass** die plattenförmigen Seitenlagen (3, 4, 5, 6) elastomere Platten sind, die an der mit dem Block verbundenen Oberfläche Reliefzonen aufweisen, welche mit der Oberfläche des Blockes in Kontakt stehend und an diese geklebt sind.

10. Verfahren zur Festigung nach Anspruch 8, **dadurch gekennzeichnet, dass** die plattenförmigen Seitenlagen (3, 4, 5, 6) dünne, flache Schichten aus Metall, Gummi oder einem imprägnierten Stoff sind und die Distanzhalterelemente auf der Oberfläche des Blocks mittels Kleben oder Anstreichen erzeugt und anschließend an die Seitenlagen geklebt werden.

11. Verfahren zur Festigung nach Anspruch 8, **dadurch gekennzeichnet, dass** die plattenförmigen Seitenlagen (3, 4, 5, 6) dünne, flache Schichten aus Metall, Gummi oder einem imprägnierten Stoff sind und die Distanzhalterelemente auf den Lagen mittels Kleben oder Anstreichen erzeugt und anschließend an die entsprechenden Wände des Blocks (1) geklebt werden.

## Revendications

1. Procédé de consolidation de blocs de pierre naturelle, ou de matière reconstituée, sensiblement parallélépipède, comportant des fractures et des cavités intérieures communiquant avec l'extérieur, en utilisant un traitement d'imprégnation sous vide en autoclave de résines pouvant durcir, comprenant les étapes, dans lesquelles
on place le bloc (1) à consolider sur une plate-forme (11) en interposant une feuille de base (2), imperméable à des liquides et à des gaz, sur laquelle on agence certains écarteurs discontinus ;
on applique à chaque paroi latérale du bloc une feuille latérale (3, 4, 5, 6), imperméable à des liquides et à des gaz, en interposant des éléments formant écarteurs (8) d'un seul tenant avec la feuille latérale ou avec la paroi du bloc (1), et en les collant respectivement à la paroi du bloc (1) ou à la feuille latérale dans le but de former une liaison par points entre le bloc (1) et lesdites feuilles latérales (3, 4, 5, 6), chaque feuille latérale (3, 4, 5, 6) étant plus haute que le bloc lui-même pour formation, sur le côté supérieur du bloc, d'un réservoir de confinement ;
on lie les unes aux autres lesdites feuilles latérales (3, 4, 5, 6) sur les côtés de bordure et à la feuille de base (2), afin de former une enveloppe qui entoure le bloc en un conteneur étanche à l'eau ;
on introduit le bloc (1) dans ledit autoclave et l'on induit un vide ;
on provoque un ruissellement sur la partie supérieure (7) du bloc (1) et dans les interstices entre le bloc et les feuilles d'une résine fluide pouvant durcir dans ledit réservoir de confinement afin de couvrir complètement le bloc lui-même ;
on élimine ledit vide de l'autoclave, de sorte que la résine pénètre lesdites fractures ou cavités à l'intérieur du bloc (1) ;
on laisse durcir ou l'on induit un durcissement de la résine autour du bloc dans lesdites fractures ou lesdites cavités intérieures.

2. Procédé de consolidation selon la revendication 1, **caractérisé en ce que** la feuille de base (2) et les feuilles latérales (3, 4, 5, 6) ont une dimension qui est plus grande de quelques centimètres que la dimension de la paroi du bloc à laquelle on les applique, et on les colle les unes aux autres en correspondance avec les bords du bloc, de façon à former un conteneur étanche à l'eau pour le bloc lui-même.

3. Procédé de consolidation selon la revendication 1, **caractérisé en ce que**, en correspondance avec les bords du bloc, on colle certains renforts angulaires dans le but d'augmenter l'étanchéité hydraulique et au vide du conteneur étanche à l'eau.

4. Procédé de consolidation selon la revendication 1, **caractérisé en ce que** les feuilles latérales (3, 4, 5, 6) sont constituées d'une seule feuille qui entoure toutes les parois verticales du bloc (1).

5. Procédé de consolidation selon la revendication 1, **caractérisé en ce qu'**il comprend une étape préliminaire de chauffe du bloc (1) dans le but de faciliter le séchage sous vide qui suit et l'évaporation de l'eau contenue à l'intérieur desdites fractures et desdites cavités.

6. Procédé de consolidation selon la revendication 5, **caractérisé en ce que** le traitement de séchage est accéléré par la condensation des vapeurs émises sur des éléments réfrigérés placés à l'intérieur dudit autoclave pendant la phase de formation de vide.

7. Procédé de consolidation selon la revendication 1, **caractérisé en ce que**, après la restauration de la pression atmosphérique à l'intérieur de l'autoclave, il s'en suit une phase de surpression qui favorise en outre la pénétration de la résine à l'intérieur du bloc (1).

8. Procédé de consolidation selon l'une quelconque des revendications précédentes, **caractérisé en ce que** lesdits écarteurs (8) maintiennent la surface (9) des feuilles à distance de la surface du bloc (1) en formant des canaux d'écoulement (10) pour ladite résine pouvant durcir.

9. Procédé de consolidation selon la revendication 8, **caractérisé en ce que** les feuilles latérales (3, 4, 5, 6) sont des feuilles en élastomère comportant, sur la surface accouplée au bloc (1), des zones de relief (8) en contact avec la surface du bloc et collées à celui-ci.

10. Procédé de consolidation selon la revendication 8, **caractérisé en ce que** les feuilles latérales (3, 4, 5, 6) sont des feuilles minces lisses, constituées de métal, de plastiques, de caoutchouc, ou de tissu imprégné, et **en ce que** les éléments formant écarteurs sont obtenus sur la surface du bloc par collage ou peinture et sont collés ultérieurement à la surface des feuilles latérales.

11. Procédé de consolidation selon la revendication 8, **caractérisé en ce que** les feuilles latérales (3, 4, 5, 6) sont des feuilles minces lisses constituées de métal, de plastiques, de caoutchouc, ou de tissu imprégné, et **en ce que** les éléments formant écarteurs sont obtenus sur la surface desdites feuilles par collage ou peinture et sont collés ultérieurement aux parois correspondantes du bloc (1).
